# EUROPÄISCHE PATENTSCHRIFT

(11) **EP 2 567 134 B1**
(45) Veröffentlichungstag und Bekanntmachung des Hinweises auf die Patenterteilung: **31.08.2016**
(21) Anmeldenummer: 11718331.9
(22) Anmeldetag: 27.04.2011
(51) Int. Cl.: F16L 27/11, H02B 5/06, H02G 5/06

(54) **ANGULARKOMPENSATOR**
ANGULAR COMPENSATOR
COMPENSATEUR ANGULAIRE

(30) Priorität: 06.05.2010 DE 202010006779 U
(43) Veröffentlichungstag der Anmeldung: 13.03.2013
(73) Patentinhaber: Siemens Aktiengesellschaft, 80333 München (DE)
(72) Erfinder: SCHMIDTKE, Markus, 16562 Bergfelde (DE); RAUTENBERG, Steffen, 12161 Berlin (DE)
(86) Internationale Anmeldenummer: PCT/EP2011/056599
(87) Internationale Veröffentlichungsnummer: WO 2011/138196

(56) Entgegenhaltungen:
- EP-A1- 0 087 653
- EP-A2- 1 484 495
- DE-A1- 10 032 797
- GB-A- 2 170 567

## Beschreibung

Die Erfindung bezieht sich auf einen Angularkompensator für eine gasisolierte Hochspannungsanlage mit einem ersten Ringflansch und einem zweiten Ringflansch, mit jeweils einer Flanschebene und von der jeweiligen Flanschebene fortragenden drehbeweglich miteinander verbunden Scharnierlappen, mittels welcher der erste und der zweite Ringflansch relativ zueinander um eine die Scharnierlappen durchstoßende Schwenkachse schwenkbar sind, wobei die Ringflansche mittels eines an den Ringflanschen fluiddicht anliegenden Kompensationsbalges miteinander verbunden sind.

Ein derartiger Angularkompensator ist beispielsweise aus der Offenlegungsschrift DE 100 32 797 A1 bekannt. Der dortige Angularkompensator weist zwei Ringflansche auf, welche mit Scharnierlappen versehen sind, die von den jeweiligen Flanschebenen fortragen. Über eine Koppelung der Schanierlappen sind die beiden Ringflansche relativ zueinander schwenkbar. Zwischen den beiden Ringflanschen erstreckt sich ein Kompensationsbalg, welcher sich fluiddicht an die Ringflansche anlegt. Die dortigen Scharnierlappen sind derart gestaltet, dass eine Schwenkbewegung der Ringflansche des Angularkompensators zueinander innerhalb eines großen Schwenkbereiches ermöglicht ist. Eine Schwenkbewegung wird lediglich durch die Verformbarkeit des Kompensationsbalges begrenzt. Ist eine häufige Schwenkbewegung zwischen den beiden Ringflanschen vorgesehen, kann dies dazu führen, dass der Kompensationsbalg eine Überdehnung erfährt und damit der Angularkompensator nicht mehr einsatzfähig ist.

Weiterhin sind beispielsweise aus den Dokumenten EP 1 484 495 A1 und GB 2 170 567 A technisch aufwendige kardanische Verbindungen von Rohren bekannt.

Daher ist es Aufgabe der Erfindung, einen Angularkompensator anzugeben, welcher einen verbesserten Schutz des Kompensationsbalges gewährleistet.

Erfindungsgemäß wird die Aufgabe dadurch gelöst, dass die Scharnierlappen in Umfangsrichtung der Ringflansche zumindest in einem ersten Richtungssinn in eine Stützrippe übergehen, wobei Stützrippen zweier drehbeweglich als Scharnier miteinander verbundener Scharnierlappen einander überdecken.

Die Scharnierlappen erstrecken sich im Wesentlichen lotrecht zu der jeweiligen Flanschebene. Einander zugewandte Flächen der Scharnierlappen sind im Wesentlichen parallel zueinander ausgerichtet. Dadurch sind die Scharnierlappen relativ zueinander beabstandet und ein freies Schwenken der Scharnierlappen zueinander ist ermöglicht.

Durch eine Anordnung einer Stützrippe an einem Scharnierlappen wird die parallele Anordnung der Scharnierlappen zueinander durchbrochen. Die Stützrippe stößt winklig an den jeweiligen Scharnierlappen und bildet einen in Umfangsrichtung des Ringflansches abfallenden Ansatz an dem im Wesentlichen planaren Scharnierlappen aus. Damit wird der Grad des Schwenkens der Ringflansche zueinander begrenzt, da eine Stützrippe zum Ende einer Schwenkbewegung beispielsweise mit dem anderen Flanschring in Kontakt tritt. Damit ist ein Anschlag gegeben, welcher den Schwenkbereich der Ringflansche relativ zueinander begrenzt.

Die ein Scharnier bildenden Scharnierlappen können dabei weiterhin parallel zueinander angeordnet sein und dabei im Wesentlichen quer zur Flanschebene an dem Ringflansch angeordnet sein. Damit ist es weiterhin möglich, dass der Ringflansch mit seiner Flanschebene parallel zu der Schwenkachse liegt und um die Schwenkachse geschwenkt werden kann. Die Scharnierlappen vom ersten und zweiten Ringflansch, die ein Scharnier bilden, können weiterhin frei zueinander schwenken. Eine Stützrippe erstreckt sich ausgehend von einem Scharnierlappen als eine aus der Ebene der Scharnierlappen in Umfangsrichtung des Ringflansches ausgelenkte Wandung. Die Stützrippe knickt aus dem planaren Bereich des Scharnierlappens aus. Eine Auslenkung der Stützrippe sollte um zumindest 45° insbesondere um zumindest 90° erfolgen. Damit wird die ebene Struktur der Scharnierlappen zueinander verlassen und ein Vorsprung seitlich an den Scharnierlappen geschaffen, welcher als Anschlag dienen kann. Die Stützrippe selbst kann in ihrer Höhe variabel ausgeführt werden, so dass der Schwenkwinkel des durch die Scharnierlappen gebildeten Scharnieres variabel begrenzt ist. Die Stützrippen zweier zu einem Scharnier verbundener Scharnierlappen überdecken einander in radialer Richtung, wobei die radiale Richtung sich auf eine lotrechte zu einer der Flanschebenen bezieht. Die einander überlappenden Stützrippen sind in Umfangrichtung bei paralleler Ausrichtung der Flanschebenen der beiden Ringflansche annähernd parallel bzw. koaxial zueinander angeordnet.

Eine weitere vorteilhafte Ausgestaltung kann vorsehen, dass die Stützrippen der als Scharnier zusammenwirkenden Stützrippen einander derart überdecken, dass die Stützrippen gegenseitig als Anschläge wirken und den Schwenkwinkel der Ringflansche zueinander begrenzen.

Sind nunmehr an den das Scharnier bildenden Scharnierlappen jeweils Stützrippen vorgesehen, die einander überragen, ist es möglich, Anschlagpunkte an den jeweiligen Stützrippen selbst vorzusehen. Durch ein Vorsehen von Stützrippen, die aneinander schlagen und einen Anschlag bilden, können die Anschlagskräfte in einen größeren Flächenbereich in den Ringflansch eingeleitet werden, so dass durch einen gegebenenfalls punktuellen Anschlag hervorgerufene Überlastungen oder Verformungen an dem Ringflansch weitestgehend vermieden sind. Dabei kann vorgesehen sein, dass die Stützrippen schalenartig zueinander liegen, wobei die Schalen jeweils in Umfangsrichtung der Ringflansche annähernd lotrecht zu der Flanschebene der Ringflansche liegen. Somit können die Anschläge durch die Wahl der Beabstandung der schalenartigen Stützrippen sowie deren Höhe in ihrem Wirkungsgrad eingestellt werden. Eine entsprechend geringe Beabstandung schränkt den Freiheitsgrad der Relativbewegung der Ringflansche zueinander stärker ein als ein relativ breiter Spalt zwischen den schalenartigen Stützrippen. Vorteilhaft sollten die einander überdeckenden Stützrippen im Bereich ihrer Überdeckung einen annähernd parallelen Verlauf (bei paralleler Anordnung der Flanschebenen) aufweisen. Weiter sind bei einem schalenartigen Ausgestalten der Stützrippen Anschlagpunkte vorteilhaft in einander zugewandten Mantelflächen gegenüberliegender Stützrippen angeordnet. Damit ist ein Anschlagen von Schwenkbewegungen begrenzenden Anschlägen lotrecht zur Flanschebene vermieden. Die Stützrippen können somit mit einer gewissen Elastizität ausgestattet sein, so dass eine Verformung der Ringflansche bei einem Anschlagen trotz gegebenenfalls elastischer Verformung der Stützrippen nicht zu erwarten ist. Damit ist der Kompensationsbalg zusätzlich von Erschütterungen entkoppelt. Die Stützrippen können vorteilhaft unmittelbar auf der Körperkante des Ringflansches stehen und dessen Formgebung folgen. So ist eine winklige Körperkante geschaffen, deren einer Winkelschenkel sich in Richtung der Flanschebene erstreckt und deren anderer Winkelschenkel möglichst lotrecht zu der Flanschebene ausgerichtet und durch die Stützrippe gebildet ist.

Vorteilhafterweise kann vorgesehen sein, dass in Umfangsrichtung jeweils beiderseits der Scharnierlappen Stützrippen angeordnet sind.

Durch eine beidseitige Anordnung von Stützrippen am Scharnierlappen ist die Schwenkbewegung der Ringflansche zueinander beidseitig der Scharnierlappen begrenzt. Damit ist ein Überdehnen des Kompensationsbalges, welcher die beiden Ringflansche miteinander verbindet, verhindert.

Eine weitere vorteilhafte Ausgestaltung kann vorsehen, dass zumindest eine Stützrippe und ein Scharnierlappen Teil eines quer zur Flanschebene auf einem Ringflansch in sich geschlossen umlaufenden Steges sind.

Durch eine Einbindung der Stützrippen und der Scharnierlappen in einen in sich geschlossenen umlaufenden Steg, wird der Ringflansch mit einer quer zur Flanschebene liegenden Steg versehen, welcher die Steifigkeit des Ringflansches verstärkt. Durch den in sich geschlossenen Umlauf des Steges können an beliebiger Stelle des Ringflansches angreifende Kräfte in einen großen Flächenbereich des Ringflansches geführt und eingekoppelt werden. Damit kann die Stabilität des Ringflansches erhöht werden, ohne die Masse des Ringflansches und dessen Ausdehnungen selbst wesentlich zu erhöhen. Somit kann durch die Stützrippen als Teil des umlaufenden Steges zum einen eine mechanische Stabilisierung des Ringflansches bewirkt werden, zum anderen kann über die Stützrippen die Schwenkbarkeit der Ringflansche zueinander eingeschränkt werden und damit der Angularkompensator vor einer Überdehnung geschützt werden. Der umlaufende Steg sollte sich dabei quer zur Flanschebene vorteilhafterweise im Wesentlichen lotrecht zu der Flanschebene an dem jeweiligen Ringflansch heraus erheben und in seinem Umlauf eine annähernd konstante Wandstärke aufweisen. Der umlaufende Steg kann vorteilhaft in Umfangrichtung an einer Körperkante des Ringflansches umlaufen und so eine abgewinkelte Körperkante bilden, die in sich geschlossen winklig umläuft. So ist eine muldenartige Struktur gegeben, die in ihrem Zentrum den Kompensationsbalg aufnimmt.

Weiterhin kann vorteilhaft vorgesehen sein, dass der umlaufende Steg im Bereich der Scharnierlappen die größte Höhe aufweist und die Scharnierlappen eines Ringflansches verbindende Abschnitte jeweils eine geringere Höhe aufweisen.

Durch die Nutzung der Scharnierlappen als größte Erhebung im Umlauf des Steges ist die Möglichkeit gegeben, zum einen eine Schwenkbewegung der Ringflansche zueinander möglichst großwinklig zuzulassen. Über den Steg und die Stützrippen als Teil des Steges wird eine Einschränkung der Schwenkbarkeit der Ringflansche zueinander bewirkt. Andererseits wird durch eine Reduzierung der Höhe der die Scharnierlappen verbindenden Abschnitte des Steges keine unnötige Einschränkung des Schwenkbereiches vorgenommen. Somit ist eine günstige Abstimmung von mechanischer Stabilisierung des Ringflansches durch den Steg bzw. die Stützrippen gegeben und andererseits wird die Schwenkbarkeit durch den Steg nicht über das nötige Maß hinaus eingeschränkt.

Eine weitere vorteilhafte Ausgestaltung kann vorsehen, dass in einer Projektion lotrecht zu einer Flanschebene Stege des ersten Ringflansches und des zweiten Ringflansches einander schneiden.

Damit ist die Möglichkeit gegeben, an den Stegen Versätze bzw. Verschwenkungen vorzusehen, so dass ein Ineinandergreifen und Überdecken der Stützrippen in den abgewinkelten Bereichen an den Scharnierlappen ermöglicht ist.

Dabei kann vorteilhafterweise weiter vorgesehen sein, dass die Stege einander genau zweimal schneiden.

Durch ein genau zweimaliges Schneiden der Stege in einer lotrechten Projektion bezüglich einer Flanschebene eines der Ringflansche ist die Möglichkeit gegeben, die Stege in einen ersten und einen zweiten Halbbogen zu unterteilen, wobei die Schnittpunkte den jeweiligen ersten und zweiten Halbbogen begrenzen. Die beiden Halbbögen können dabei unterschiedlich geformt sein, so dass einer der Halbbögen einen größeren Umfang aufweist als der andere Halbbogen. Bei einem Ineinanderklappen der Halbbögen würde der eine Halbbogen von dem anderen Halbbogen überspannt werden, wobei beide Halbbögen an denselben Fußpunkten enden.

Es kann weiterhin vorteilhaft vorgesehen sein, dass der Kompensationsbalg mittels eines Losflansches unter Zwischenlage eines Dichtungselementes an zumindest einem Ringflansch befestigt ist.

Der Kompensationsbalg verbindet die beiden Ringflansche fluiddicht miteinander. In den Ringflanschen liegende Flanschöffnungen sind von den beiden Enden des Kompensationsbalges derart umgriffen, dass zwischen den beiden Ringflanschen ein flexibel verformbarer Rohrabschnitt verläuft. Die Ringflansche schmiegen sich dabei fluiddicht an den Kompensationsbalg an, so dass mittels des Angularkompensators Relativbewegungen zwischen an den beiden Ringflanschen angeschlossenen Anlagenteilen ausgeglichen werden können. Derartige Anlagenteile können beispielsweise Kapselungsgehäuse einer Hochspannungsanlage sein, welche in ihrem Inneren elektrisch aktive Leiterelemente aufnehmen und diese elektrisch aktiven Leiterelemente gegenüber dem Ringflansch bzw. gegentionsbalg durch Einbringung eines elektrisch isolierenden Gases elektrisch isolieren. Der Kompensationsbalg sowie die Ringflansche sind dabei Teil einer Barriere einer Kapselung, die ein Entweichen des elektrisch isolierenden Gases verhindert. Somit ist eine Verbindung zwischen dem Kompensationsbalg und den Ringflanschen fluiddicht auszuführen.

Ist der Kompensationsbalg mittels eines Losflansches befestigt, so ist es möglich, den Kompensationsbalg zu ersetzen und Reparaturen des Angularkompensators vorzunehmen. Durch die Zwischenlage eines Dichtungselementes kann ein entsprechender fluiddichter Übergang zwischen Kompensationsbalg und Ringflansch sichergestellt werden. Der Losflansch kann beispielsweise mittels Schraubverbindungen mit einem der Ringflansche flächig verschraubt werden. Zur Aufnahme des Losflansches sowie des zwischengelegten Kompensationsbalges können in dem Ringflansch jeweils Ausnehmungen vorgesehen sein, so dass nach einem Einlegen des Losflansches in den Ringflansch eine annähernd ebene Fläche gegeben ist, die möglichst wenige Vorsprünge aufweist.

Eine weitere vorteilhafte Ausgestaltung kann vorsehen, dass der Losflansch von einem umlaufenden Steg eines Ringflansches umschlossen ist.

Ein Umlauf des Losflansches mit einem Steg ermöglicht es, aus radialen Richtungen einwirkende Kräfte von dem Losflansch bzw. von dem Verbindungsbereich des Kompensationsbalges mit einem Ringflansch fernzuhalten. Der umlaufende Steg kann sich dabei mantelartig um den Ringflansch erstrecken und im Abschattungsbereich der mantelartigen Erhebung den Losflansch aufnehmen.

Eine weitere vorteilhafte Ausgestaltung kann vorsehen, dass Ringflansch und Stützrippe beziehungsweise Steg Teile eines einstückig gegossenen Gussteiles sind.

Ein einstückiges Gussteil ermöglicht es, eine Vielzahl von Angularkompensatoren kostengünstig herzustellen. Durch einen einstückigen Verbund von Ringflansch und Stützrippe bzw. Steg ist ein winkelsteifer Körper gegeben, welcher hohen mechanischen Belastungen standhält. Darüber hinaus sind weitere Nachbearbeitungen eines Gussteiles nur in begrenztem Maße nötig. Somit ist es kostengünstig möglich, einen fluiddichten Angularkompensator zu fertigen.

Weiterhin kann vorteilhaft vorgesehen sein, dass der erste und der zweite Ringflansch Gleichteile sind.

Der Einsatz von Gleichteilen ermöglicht, lediglich einen einzigen Ringflansch zu dimensionieren und diesen mit einem Gleichteil zu verbinden. Dazu sollte vorgesehen sein, dass die Scharnierlappen an dem Ringflansch diametral gegenüberliegend angeordnet sind, wobei deren radialer Abstand zu einem Zentrum des Ringflansches derart unterschiedlich sein sollte, so dass bei einer Drehung um 180° zueinander und einer Anordnung der gleichartigen Ringflansche Rücken an Rücken zueinander, an gegenüberliegenden Seiten der Ringflansche liegende Scharniere zwischen den Scharnierlappen ausgebildet sind. Eine Verwendung von Gleichteilen ist insbesondere bei Verwendung eines Gussteiles vorteilhaft, da lediglich eine einzige Form geschaffen werden muss, mittels welcher baugleiche erste und zweite Ringflansche erzeugbar sind.

Im Folgenden wird die Erfindung anhand einer Zeichnung schematisch gezeigt und nachfolgend näher beschrieben.

Dabei zeigt die
- Figur 1: eine perspektivische Ansicht eines Angularkompensators, die
- Figur 2: eine perspektivische Ansicht eines Ringflansches und die
- Figur 3: einen Schnitt durch miteinander verbundene Scharnierlappen eines ersten und eines zweiten Ringflansches.

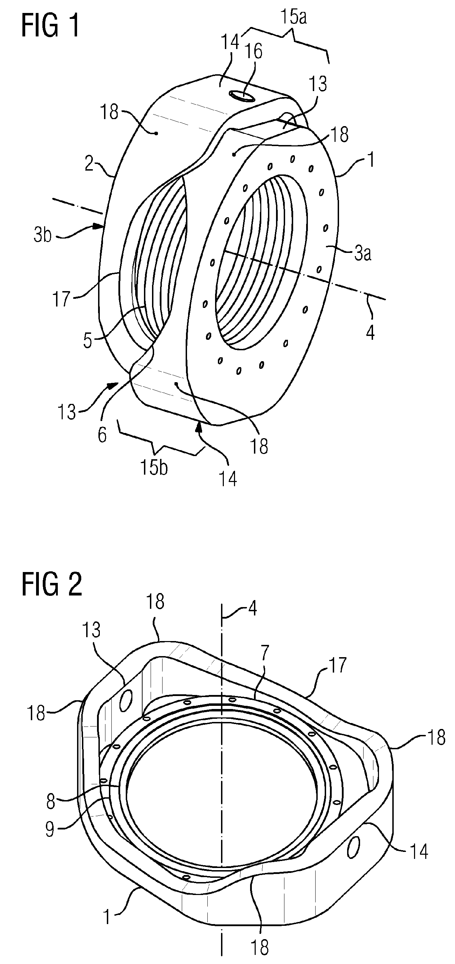

Die Figur 1 zeigt einen Angularkompensator aufweisend einen ersten Ringflansch 1 sowie einen zweiten Ringflansch 2. Die beiden Ringflansche 1, 2 sind vorliegend als Gleichteile ausgearbeitet. Die beiden Ringflansche 1, 2 sind dabei bezogen auf ihre Flanschflächen 3a, 3b Rücken an Rücken ausgerichtet, wobei sie bezogen auf eine Längsachse 4, welche lotrecht zu den beiden Flanschflächen 3a, 3b in parallel zueinander ausgerichteten Zustand liegt, um 180° zueinander verdreht angeordnet sind. Die Flanschflächen 3a, 3b definieren die Lage der Flanschebenen. Koaxial zur Hauptachse 4 sind in den Flanschflächen 3a, 3b von erstem und zweitem Ringflansch 1, 2 kreisrunde Flanschöffnungen angeordnet. Die Flanschöffnungen sind koaxial zur Längsachse 4 angeordnet. Zur Verbindung von erstem Ringflansch 1 und zweitem Ringflansch 2 mit sich in Richtung der Hauptachse 4 anschließenden Baugruppen sind in die Ringflansche 1, 2 jeweils Bohrungen eingebracht, mittels welcher die Flanschflächen 3a, 3b gegen die weiteren Baugruppen gepresst werden können. Auf den einander zugewandten Seiten der Ringflansche 1, 2 ist ein Kompensationsbalg 5 angeordnet, welcher am Umfang der Flanschöffnungen jeweils fluiddicht mit dem ersten bzw. dem zweiten Ringflansch 1, 2 verbunden ist. Die Ringflansche 1, 2 sind metallische Ringflansche die vorzugsweise mittels eines Gussverfahrens ausgeformt werden. Als Gussmaterial eignen sich dabei Nichteisenmetalle, wie beispielsweise Aluminium oder auch Eisenmetalle wie Stahl. Der Kompensationsbalg 5 selbst ist nach Art eines Rohres geformt, dessen Rohrwandung mit einer Vielzahl meandrierender Welllagen ausgestattet ist. Aufgrund der Wellung des Kompensationsbalges 5 ist es möglich, dass der Kompensationsbalg 5 verformbar ist, ohne dabei eine Überbeanspruchung des Materials des Kompensationsbalges 5 herbeizuführen. Der Kompensationsbalg 5 ist beispielsweise aus einem gewellten Stahlblech gefertigt.

An den einander zugewandten Seiten der Ringflansche 1, 2 sind die Ringflansche 1, 2 jeweils mit einem umlaufenden Steg 6 versehen. Aufgrund der Verwendung von Gleichteilen für den ersten Ringflansch 1 und den zweiten Ringflansch 2 wird im Folgenden der Aufbau eines Steges 17 anhand der Struktur des ersten Ringflansches 1 beschrieben.

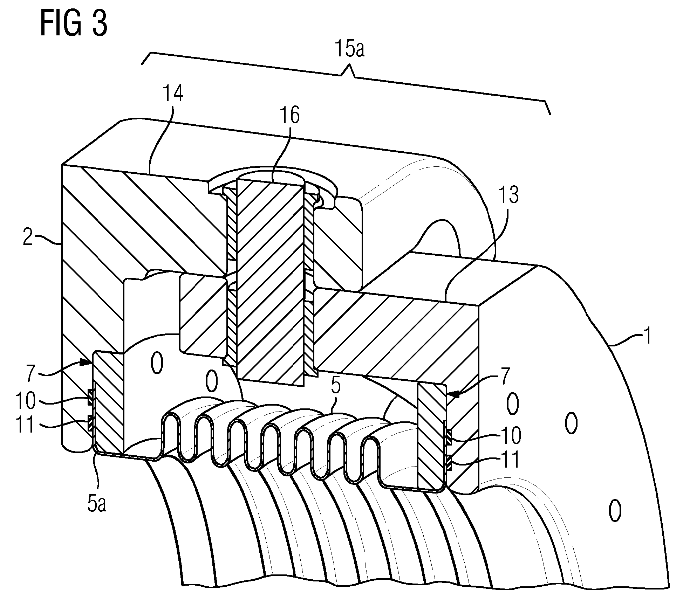

In der Figur 2 ist eine perspektivische Ansicht des ersten Ringflansches 1 dargestellt, wobei der in der Figur 1 gezeigte Kompensationsbalg 5 sowie der zweite Ringflansch 2 noch nicht montiert sind. Die kreisrunde Flanschöffnung liegt koaxial zur Längsachse 4 und ist von einer Wandung des ersten Ringflansches 1 begrenzt. Die Flanschöffnung ist von einer kreisringförmigen Anpressfläche 7 umgeben, welche planar ausgeführt ist. In der Anpressfläche 7 sind koaxial zur Längsachse 4 umlaufende Ausnehmungen 8, 9 eingebracht, welche jeweils nach Art einer Nut in sich geschlossen umlaufen. Die Ausnehmungen 8, 9 dienen der Aufnahme eines oder mehrerer Dichtelemente 10, 11 (vgl. Figur 3). Des Weiteren sind in die Anpressfläche 7 Gewindebohrungen eingebracht, mittels welcher ein Losflansch 12 unter Zwischenlage einer ringförmigen Anpresskante 5a des Kompensationsbalges 5 und der Dichtelemente 10, 11 mit dem ersten Ringflansch 1 fluiddicht verbunden sein können (vgl. Fig. 3). Die Gewindebohrungen dienen der Aufnahme entsprechender Gewindebolzen, um einen Losflansch 12 gegen den ersten Ringflansch 1 unter Zwischenlage des Kompensationsbalges 5 bzw. der Dichtelemente 10, 11 zu verschrauben.

An diametral gegenüberliegenden Seiten der Flanschöffnung ist ein erster Scharnierlappen 13 sowie ein zweiter Scharnierlappen 14 angeordnet. Die beiden Scharnierlappen 13, 14 sind im Wesentlichen lotrecht zu der Flanschebene des ersten Ringflansches 1 angeordnet und sind im Wesentlichen planar ausgeführt. Die auf einer Geraden durch die Längsachse 4 liegenden Flanschlappen sind unterschiedlich von der Längsachse 4 beabstandet an dem ersten Ringflansch 1 angeordnet. Dabei ist der erste Scharnierlappen 13 längs der Geraden näher an dem Mittelpunkt der Flanschöffnung, durch welche die Längsachse 4 verläuft, angeordnet als der zweite Scharnierlappen 14. Der Versatz, um welchen die Beabstandung von erstem und zweitem Scharnierlappen 13, 14 differiert, entspricht dabei im Wesentlichen der Wandstärke der Scharnierlappen 13, 14, so dass bei einer Drehung zweier Gleichteile um die Längsachse 4 um 180° aus einem ersten Scharnierlappen 13 des ersten Ringflansches 1 und einem zweiten Scharnierlappen 14 des zweiten Ringflansches 2 ein erstes Scharnier 15a sowie aus einem zweiten Scharnierlappen 14 des ersten Ringflansches 1 sowie einem ersten Scharnierlappen 13 des zweiten Ringflansches 2 ein zweites Scharnier 15b gebildet ist (vgl. Figur 1). In den Scharnierlappen 13, 14 sind jeweils Bohrungen angeordnet, welche lotrecht zu der Längsachse 4 ausgerichtet sind. In die Bohrungen sind entsprechende Bolzen 16 einsetzbar, so dass eine Schwenkbewegung zwischen den beiden Ringflanschen 1, 2 ermöglicht ist. Die beiden Scharniere 15a, 15b stellen dabei eine Schwenkachse zur Verfügung, welche parallel zu den jeweiligen Flanschebenen angeordnet ist. Folglich ist diese Schwenkachse auch rechtwinklig zu der Längsachse 4 ausgerichtet. Die Längsachse 4 und die Scharnierachse der Scharniere 15a, 15b schneiden einander.

Am äußeren Umfang des ersten Ringflansches 1 ist ein in sich geschlossener Steg 17 angeordnet. Der Steg 17 weist eine annähernd konstante Wandstärke auf, wobei dieser im Wesentlichen lotrecht zu der Flanschebene des ersten Ringflansches 1 auf einer Körperkante umläuft. Der Umlauf erfolgt dabei um die Flanschöffnung sowie um jene, die Flanschöffnung durchsetzende Längsachse 4. Die Scharnierlappen 13, 14 sind dabei Teil des Steges 17 und weisen bezüglich der Flanschebene 3a in lotrechter Richtung die größte Ausdehnung des in sich umlaufenden Steges 17 auf. Beiderseits der Scharnierlappen 13, 14 schließen sich Stützrippen 18 an die Scharnierlappen 13, 14 an, welche dem Verlauf der Körperkante des ersten Ringflansches 1 in Umfangsrichtung folgen. Dadurch sind die planaren Scharnierlappen 13, 14 beiderseits in Umfangsrichtung von einer abknickenden Wandung, welche durch die Stützrippen 18 realisiert ist, eingefasst. Die Stützrippen 18 weisen dabei eine gegenüber den Scharnierlappen 13, 14 reduzierte Höhe auf. Dabei ist der Krümmungsgrad der Stützrippen 18, welche sich beiderseits des ersten Scharnierlappens 13 erstrecken, kleiner als der Krümmungsradius der beiderseits des zweiten Scharnierlappens 14 angeordneten Stützrippen 18. Die jeweils beiderseits der Scharnierlappen 13, 14 vorgesehenen Abschnitte, welche die Scharnierlappen 13, 14 untereinander verbinden, weisen eine gegenüber den Scharnierlappen 13, 14 reduzierte Höhe auf. Auf der Körperkante des ersten Ringflansches 1 läuft somit ein Steg 17 in sich geschlossen um, welcher einen ersten Scharnierlappen 13 sowie einen zweiten Scharnierlappen 14 sowie sich daran anschließende, den jeweiligen planaren Abschnitt der Scharnierlappen 13, 14 begrenzende und abwinkelnde Stützrippen 18 aufweist, welche untereinander mit jeweils einem Verbindungsabschnitt verbunden sind. Der umlaufende Steg 17 ist dabei derart ausgeformt, dass die Körperkante am äußeren Umfang des ersten Ringflansches 1 durch einen Winkelabschnitt gebildet ist, dessen einer Winkelschenkel sich in die Flanschebene des ersten Ringflansches 1 erstreckt und dessen anderer Winkelschenkel lotrecht zu der Flanschebene steht, wobei der andere Winkelschenkel durch den Steg 17, der in sich umlaufend geschlossen ist, gebildet wird.

Der in der Figur 1 gezeigte erste Ringflansch 1 entspricht in seiner Konstruktion dem zweiten Ringflansch 2, wie er in der Figur 1 gezeigt ist. Lediglich die Lage von erstem Ringflansch 1 und zweitem Ringflansch 2 ist in der Figur 1 derart gewählt, dass die beiden Ringflansche 1, 2 mit ihren beiden Flanschflächen 3a, 3b auf der Längsachse entgegengesetzt zueinander ausgerichtet sind, wobei zusätzlich um 180° zur Längsachse 4 eine Verdrehung der beiden Ringflansche 1, 2 zueinander erfolgt ist. Aufgrund der unterschiedlichen Abwinkelung bzw. Krümmung der Stützrippen 18 an den nunmehr einander gegenüberliegenden ersten und zweiten Scharnierlappen 13, 14 von erstem bzw. zweitem Ringflansch 1, 2 sowie der verschiedenartig radialen Beabstandung der ersten und zweiten Scharnierlappen 13, 14, sind nunmehr ein erstes Scharnier 15a sowie ein zweites Scharnier 15b gebildet. Die beiden Scharniere 15a, 15b sind zur drehbeweglichen Kopplung jeweils von einem Bolzen 16 durchsetzt.

Die Figur 3 zeigt das erste Scharnier 15a in einem Schnitt. Der erste Scharnierlappen 13 des ersten Ringflansches 1 sowie der zweite Scharnierlappen 14 des zweiten Ringflansches 2 sind Teil des ersten Scharniers 15a. Die beiden Scharnierlappen 13, 14 des ersten Scharniers 15a sind mittels eines Bolzens 16 relativ zueinander positioniert, wobei eine Ausrichtung des Bolzens 16 die Schwenkachse der beiden Ringflansche 1, 2 definiert. Auf den einander zugewandten Seiten, umgeben von den jeweiligen Stegen 17 des ersten Ringflansches 1 bzw. des zweiten Ringflansches 2, ist der Kompensationsbalg 5 fluiddicht mit dem ersten und dem zweiten Ringflansch 1, 2 verbunden. Dazu weist der Kompensationsbalg 5 an seinen stirnseitigen Enden jeweils einen ringförmigen radial abgekanteten Anpressstreifen 5a auf, welche gegen die Anpressflächen 7 von erstem bzw. zweitem Ringflansch 1, 2 gepresst werden. In den Anpressflächen 7 sind jeweils Dichtelemente 10, 11 in Ausnehmungen 8, 9 angeordnet. Die Dichtelemente 10, 11 laufen dabei ringförmig um die Flanschöffnung um und liegen in der jeweiligen Anpressfläche 7 des ersten bzw. zweiten Ringflansches 1, 2. Zum Anpressen der ringförmigen Anpressstreifen 5a des Kompensationsbalges 5 sind Losflansche 19 vorgesehen. Die Losflansche 19 umgreifen den Kompensationsbalg 5a an jeweils entgegengesetzt liegenden Enden und pressen die jeweiligen ringförmigen Anpressstreifen 5a an die Anpressflächen 7 von erstem bzw. zweitem Ringflansch 1, 2. Nunmehr sind die Flanschöffnungen von erstem Ringflansch 1 und zweitem Ringflansch 2 auf den einander zugewandten Seiten der Ringflansche 1, 2 fluiddicht umschlossen und der Kompensationsbalg 5 bildet einen fluiddichten Kanal zwischen den beiden Flanschöffnungen aus. Die Losflansche 19 sind mittels Gewindebolzen in den Gewindebohrungen der Anpressflächen 7 fixiert.

Die beiden Ringflansche 1, 2 sind um die durch die Bolzen 16 definierte Schwenkachse relativ zueinander schwenkbar, wobei bei einem Schwenken die Flanschebenen 3a, 3b relativ zueinander verkippen und dabei eine Verformung des Kompensationsbalges 5 erfolgt. In radialer Richtung der Längsachse 4 überdecken sich jeweils die Stützrippen 18, so dass die einander jeweils gegenüberliegenden Stützrippen 18 schalenförmig voneinander beabstandet sind (vgl. Figur 1). Je nach radialer Beabstandung der einander gegenüberliegenden und einander überdeckenden Rippen 18 ist der Schwenkbereich der beiden Ringflansche 1, 2 zueinander mehr oder weniger stark begrenzt. Dabei ergeben sich Anschlagpunkte, welche, bezogen auf die Lage der Längsachse 4, mantelseitig, entweder innen- oder außenmantelseitig, an den Stützrippen 18 liegen.

Aufgrund der unterschiedlichen Krümmung der sich an den ersten bzw. den zweiten Scharnierlappen 13, 14 anschließenden Stützrippen 18, ergebenen sich bei einer Projektion in Richtung der Längsachse 4 zwei Schnittpunkte zwischen den Stegen 17. An den Schnittpunkten wechseln die halbbogenförmigen Abschnitte des jeweiligen Steges 17 von einer innenliegenden zu einer außenliegenden Schale bzw. von einer außenliegenden Schale zu einer innenliegenden Schale. Im Bereich der in einer Projektion liegenden Schnittpunkte weisen die in sich umlaufenden Stege 17 jeweils ihre geringste lotrechte Ausdehnung bezüglich der Flanschebenen auf.

Wie man in der Figur 1 sowie in der Figur 2 erkennen kann, umgreifen die Stege 17 den Kompensationsbalg 5 mantelseitig, schalenartig, so dass der Kompensationsbalg 5 am Umfang in großen Bereichen vor einem unmittelbaren Einwirken von Kräften geschützt ist. Somit ist insbesondere eine Beschädigung des Angularkompensators während Montage- und Transportarbeiten verhindert.

## Patentansprüche

1. Angularkompensator für eine gasisolierte Hochspannungsanlage mit einem ersten Ringflansch (1) und einem zweiten Ringflansch (2), mit jeweils einer Flanschebene (3a, 3b) und von der jeweiligen Flanschebene (3a, 3b) fortragenden drehbeweglich miteinander verbunden Scharnierlappen (13, 14), mittels welcher der erste und der zweite Ringflansch (1, 2) relativ zueinander um eine die Scharnierlappen (13, 14) durchstoßende Schwenkachse schwenkbar sind, wobei die Ringflansche (1. 2) mittels eines an den Ringflanschen (1, 2) fluiddicht anliegenden Kompensationsbalges miteinander verbunden sind,
**dadurch gekennzeichnet, dass** die Scharnierlappen (13, 14) in Umfangsrichtung der Ringflansche (1, 2) zumindest in einem ersten Richtungssinn in eine Stützrippe (18) übergehen, wobei Stützrippen (18) zweier drehbeweglich als Scharnier (15a, 15b) miteinander verbundener Scharnierlappen (13, 14) einander überdecken.

2. Angularkompensator nach Anspruch 1,
**dadurch gekennzeichnet, dass** die Stützrippen (18) der als Scharnier (15a, 15b) zusammenwirkenden Stützrippen (18) einander derart überdecken, dass die Stützrippen (18) gegenseitig als Anschläge wirken und den Schwenkwinkel der Ringflansche (1, 2) zueinander begrenzen.

3. Angularkompensator nach Anspruch 1 oder 2,
**dadurch gekennzeichnet, dass** in Umfangsrichtung jeweils beiderseits der Scharnierlappen (13, 14) Stützrippen (18) angeordnet sind.

4. Angularkompensator nach einem der Ansprüche 1 bis 3,
**dadurch gekennzeichnet, dass** zumindest eine Stützrippe (18) und zumindest ein Scharnierlappen (13, 14) Teil eines quer zur Flanschebene (3a, 3b) auf einem Ringflansch (1, 2) in sich geschlossen umlaufenden Steges (17) sind.

5. Angularkompensator nach Anspruch 4,
**dadurch gekennzeichnet, dass** der umlaufende Steg (17) im Bereich der Scharnierlappen (13, 14) die größte Höhe aufweist und die Scharnierlappen (13, 14) eines Ringflansches (1, 2) verbindende Abschnitte jeweils eine geringere Höhe aufweisen.

6. Angularkompensator nach Anspruch 5,
**dadurch gekennzeichnet, dass** in einer Projektion lotrecht zu einer Flanschebene (3a, 3b) Stege (17) des ersten Ringflansches (1) und des zweiten Ringflansches (2) einander schneiden.

7. Angularkompensator nach Anspruch 6,
**dadurch gekennzeichnet, dass** die Stege (17)einander genau zweimal schneiden.

8. Angularkompensator nach einem der Ansprüche 1 bis 7,
**dadurch gekennzeichnet, dass** der Kompensationsbalg (5)mittels eines Losflansches (19) unter Zwischenlage eines Dichtungselementes (10, 11) an zumindest einem Ringflansch (1, 2) befestigt ist.

9. Angularkompensator nach Anspruch 8,
**dadurch gekennzeichnet, dass** der Losflansch (19) von einem umlaufenden Steg (17) eines Ringflansches umschlossen ist.

10. Angularkompensator nach einem der Ansprüche 1 bis 9,
**dadurch gekennzeichnet, dass** Ringflansch (1, 2) und Stützrippe (18) beziehungsweise Steg (17) Teile eines ein einstückig gegossenen Gussteiles sind.

11. Angularkompensator nach einem der Ansprüche 1 bis 10,
**dadurch gekennzeichnet, dass** der erste und der zweite Ringflansch (1, 2) Gleichteile sind.

## Claims

1. Angular compensator for a gas-insulated high-voltage installation having a first annular flange (1) and a second annular flange (2) having in each case one flange plane (3a, 3b) and hinge flaps (13, 14), which project from the respective flange plane (3a, 3b) and are connected to one another such that they can rotate, by means of which hinge flaps (13, 14) the first and the second annular flanges (1, 2) can pivot relative to one another about a pivoting axis which passes through the hinge flaps (13, 14), with the annular flanges (1, 2) being connected to one another by means of a compensation bellows which rests in a fluid-type manner on the annular flanges (1, 2),
**characterized in that** the hinge flaps (13, 14) merge into a supporting rib (18) in the circumferential direction of the annular flanges (1, 2), at least in a first rotation sense, with supporting ribs (18) of two hinge flaps (13, 14) which are connected to one another as a hinge (15a, 15b) such that they can rotate covering one another.

2. Angular compensator according to Claim 1,
**characterized in that** the supporting ribs (18) of the supporting ribs (18) which interact as a hinge (15a, 15b) cover one another such that the supporting ribs (18) mutually act as stops, and limit the pivoting angle of the annular flanges (1, 2) with respect to one another.

3. Angular compensator according to Claim 1 or 2, **characterized in that** supporting ribs (18) are in each case arranged on both sides of the hinge flaps (13, 14) in the circumferential direction.

4. Angular compensator according to one of Claims 1 to 3, **characterized in that** at least one supporting rib (18) and at least one hinge flap (13, 14) are part of a circumferential web (17) which is intrinsically closed transversely with respect to the flange plane (3a, 3b) on an annular flange (1, 2).

5. Angular compensator according to Claim 4, **characterized in that** the circumferential web (17) has the greatest height in the area of the hinge flaps (13, 14), and sections which connect the hinge flaps (13, 14) of an annular flange (1, 2) each have a lesser height.

6. Angular compensator according to Claim 5, **characterized in that** webs (17) on the first annular flange (1) and on the second annular flange (2) intersect one another in a projection at right angles to a flange plane (3a, 3b).

7. Angular compensator according to Claim 6, **characterized in that** the webs (17) intersect one another twice and only twice.

8. Angular compensator according to one of Claims 1 to 7, **characterized in that** the compensation bellows (5) is attached to at least one annular flange (1, 2) by means of a loose flange (19), with the interposition of a sealing element (10, 11).

9. Angular compensator according to Claim 8, **characterized in that** the loose flange (19) is surrounded by a circumferential web (17) of an annular flange.

10. Angular compensator according to one of Claims 1 to 9, **characterized in that** the annular flange (1, 2) and the supporting rib (18) or web (17) are parts of an integral casting.

11. Angular compensator according to one of Claims 1 to 10, **characterized in that** the first and the second annular flanges (1, 2) are identical parts.

## Revendications

1. Compensateur angulaire pour une installation de haute tension à isolation par du gaz, comprenant une première bride (1) annulaire et une deuxième bride (2) annulaire, ayant respectivement un plan (3a, 3b)de bride et des oreilles (13, 14) de charnière, qui partent du plan (3, 3b) de bride respectif, qui sont reliées entre elles d'une manière mobile en rotation et aux moyens desquelles, la première et la deuxième bride (1, 2) annulaires peuvent pivoter l'une par rapport à l'autre autour d'un axe de pivotement traversant les oreilles (13, 14) de charnière, les brides (1, 2) annulaires étant reliées l'une à l'autre au moyen d'un soufflet de compensation s'appliquant d'une manière étanche aux fluides aux brides (1, 2) annulaires,
**caractérisé en ce que** les oreilles (13, 14) de charnière se transforment dans la direction du pourtour des brides (1, 2) annulaires, au moins dans un premier sens, en une nervure (18) d'appui, des nervures (18) d'appui de deux oreilles (13, 14) de charnière, reliées l'une à l'autre d'une manière mobile à rotation sous forme de charnière (15a, 15b), se recouvrant l'une l'autre.

2. Compensateur angulaire suivant la revendication 1, **caractérisé en ce que** les nervures (18) d'appui des nervures (18) d'appui coopérant en charnière (15a, 15b) se recouvrent l'une l'autre de manière à ce que les nervures (18) d'appui agissent mutuellement comme des butées et délimitent l'angle de pivotement des brides (1, 2) annulaires l'une par rapport à l'autre.

3. Compensateur angulaire suivant la revendication 2, **caractérisé en ce que**, dans la direction du pourtour, des nervures (18) sont disposées respectivement de deux côtés des oreilles (13, 14) de charnière.

4. Compensateur angulaire suivant l'une des revendications 1 à 3, **caractérisée en ce qu'**au moins une nervure (18) d'appui et au moins une oreille (13,14) de charnière font parties d'une nervure (17) faisant le tour, en soi fermée sur une bride (1,2) annulaire transversalement au plan (3a, 3b) de bride.

5. Compensateur angulaire suivant la revendication 4, **caractérisé en ce que** la nervure (17) faisant le tour a dans la partie des oreilles (13, 14) de charnière la hauteur la plus grande et les parties reliant les oreilles (13, 14) de charnière de la bride à (1, 2) annulaire, ont respectivement une hauteur plus petite.

6. Compensateur angulaire suivant la revendication 5, **caractérisé en ce que**, dans une projection verticale par rapport à un plan (3a, 3b) de bride, la nervure (17) de la première bride (1) annulaire et de la deuxième bride (2) se coupent l'une l'autre.

7. Compensateur angulaire suivant la revendication 6, **caractérisé en ce que** les nervures (17) se coupent l'une l'autre exactement deux fois.

8. Compensateur angulaire suivant l'une des revendications 1 à 7, **caractérisé en ce que** le soufflet (5) de compensation est fixé à au moins une bride (1, 2) annulaire au moyen d'une plaque (19) tournante avec interposition d'un élément (10,11) d'étanchéité.

9. Compensateur angulaire suivant la revendication 8, **caractérisé en ce que** la plaque (19) tournante est entourée d'une nervure (17) faisant le tour d'une bride annulaire.

10. Compensateur angulaire suivant l'une des revendications 1 à 9, **caractérisé en ce que** la bride (1,2) annulaire et la nervure (18) d'appui ou la nervure (17) font partie d'une pièce coulée d'un seul tenant.

11. Compensateur angulaire suivant l'une des revendications 1 à 10, **caractérisé en ce que** la première et la deuxième bride (1, 2) annulaires sont des parties pareilles.
